# EUROPEAN PATENT APPLICATION

(11) **EP 0 811 585 A1**
(43) Date of publication of application: **10.12.1997**
(21) Application number: 96903230.9
(22) Date of filing: 23.02.1996
(51) Int. Cl.: C04B 28/14, C04B 18/24, C04B 20/00, C04B 11/00, B28B 1/16, B28B 1/38, B28B 5/02

(54) **COMPOSITE GYPSUM BOARD**

(30) Priority: 24.02.1995 JP 37214/95; 30.05.1995 JP 155150/95; 22.02.1996 JP 35023/96
(71) Applicant: CHICHIBU ONODA CEMENT CORPORATION, Minato-ku, Tokyo 105 (JP)
(72) Inventor: NAGATA, Norifumi Chichibu Onoda Cement Corporation, Sa kura-shi, Chiba 285 (JP); TANABE, Shinkichi, Chichibu Onoda Cement Corp., Sakura-shi, Chiba 285 (JP); NAKAKUKI, Yoshikazu, Chichibu Onoda Cement Corp., Sakura-shi, Chiba 285 (JP); MASUDA, Kenta, Chichibu Onoda Cement Corporation, Sakura-shi, Chiba 285 (JP); UCHIYAMA, Kenichi, Ichihara-shi, Chiba 290-02 (JP); AIKAWA, Masayuki, Sodegaura-shi, Chiba 299-02 (JP); SASANO, Tetsuro, Ichihara-shi, Chiba 299-01 (JP)
(74) Representative: Godwin, Edgar James
(86) International application number: JP9600425
(87) International publication number: WO9626166

(57) **Abstract**

A composite plasterboard and a process for its production which comprise a plaster stock and a filler incorporated therein, characterized in that the filler comprises as essential components a paper chip and/or a chip body, and the filler is oriented to lie substantially in parallel with a plane perpendicular to the thickness direction of the composite plasterboard. According to the present invention, the resultant composite plasterboard is greatly improved in respect of bending strength and screw-and nail-holding capabilites. In view of the reuse of those waste materials having today invited public attention, the invention is of great significance.

## Description

### Technical Field

This invention relates to composite plasterboards having paper chips incorporated therein. More particularly, the invention relates to a composite plasterboard which exhibits bending strength and screw-and nail-holding capabilities to a noticeably excellent extent and also contributes to providing a method of the treatment of those waste materials having today invited public attention.

### Background Art

Due to recent diversification of building structures, building materials have been required to be improved in regard to their physical performance in many respects. Also in the case of plasterboards extensively used as inorganic interior building materials of low cost and high fire resistance, a keen demand has been raised for improvements relating in particular to both bending strength and screw- and nail-holding capabilities. To cope with this trend, it is known for instance to incorporate a fibrous material in a plaster stock, and such fibrous material is typified by a fibrillated pulp.

In order to bring a plaster stock into composite form by adding a fibrillated pulp to the plaster stock, a pulp stock is made fibrous for example by means of an impact grinder such as a hammer mill, or a wet fibrillator such as a pulper, followed by dispersion of the resulting fiber in a matrix of the plaster stock.

This method is effective in obtaining reinforced plasterboard. In practical plasterboard production, however, it is difficult from a technical viewpoint to gain a homogeneous mixture with good efficiency by kneading a fibrillated pulp and a particulate plaster stock in water as the fibril is extremely bulky. Pulp fibers known in the art are fine fibers usually dimensioned to be about 0.1 - 3 mm in length and about 10 - 100 µm in width. They get entangled with each other in a plaster slurry during mixing with the starting materials, causing a sharp decline in fluidity of the slurry. Hence, in a plasterboard production line in which the starting materials are required to become a slurry, such a fibrous material can be added only in an amount of about 0.1 - 2% or about 3% at most. With the fiber incorporated in so limited an amount, the finished plasterboard is not so much improved as expected, especially in respect of plasterboard characteristics such as bending strength, screw- and nail-holding capabilities and so on. In some instances, these characteristics might rather be impaired since the fiber even when added become separated from the other starting materials at the time the production is initiated.

On the other hand, as a result of today's growing housing developments or persons' impact consciousness on privacy protection, sound insulation has been strongly demanded for building materials. Suitable means to be used in coping with this demand lies in increasing the specific gravity of a plaster hard body that is a core material composed mainly of a plaster stock and filled between two base papers for plasterboard use. The specific gravity of this plaster hard body depends on the amount of water to be added to a plaster slurry and has a tendency to necessarily drop as the amount of water rises. To gain increased specific gravity of the plaster hard body, it is therefore important that a plaster slurry composition be prepared with a high specific gravity by the addition of water in a small amount.

A plasterboard is produced by casting a plaster slurry into between two base papers for plasterboard use, which plaster slurry is usually derived by putting dried gypsum and water in a mixer, followed by stirring of the resulting mixture. The plaster slurry should be fluid to so a degree as to ensure cast molding. In particular, a continuous plasterboard production line needs for a highly fluid plaster slurry to be used to suitably match the restricted inlet passage of a mixer of a complicated shape. In such instance, conventional practice has rendered a plaster slurry adjustably fluid with addition of water in an adjusted amount, or a hydrophobic agent or an emulsifier called a dispersing agent. Of these ways, use of the emulsifier in adjusting the fluidity of the plaster slurry gives rise to varying results depending on the kind of emulsifiers, but results in a relatively narrow range of adjustments. Namely, although the emulsifier content and slurry fluidity are generally fairly correlative with each other, the slurry fluidity would in most cases become saturated in certain small contents of the emulsifier. Larger contents of the emulsifier produce bubbling in the plaster slurry, adversely involving reduced specific gravity of the resultant plaster hard body. As contrasted to the foregoing ways, varying amounts of water used for kneading purposes can be said to be markedly effective because slurry fluidity is adjustable in a wide range. To increase the amount of water in a sense to achieve improved moldability, however, causes the hardened plaster to include much water which has not taken part in hydration, thus revealing a steep drop in specific gravity of the plaster hard body and besides requires a large volume of heat in drying such plaster hard body. Needless to say, enhanced fluidity of the plaster slurry resulting from increased amount of water is undesirable since a plasterboard of high sound proofness and great specific gravity is not feasible in an economical manner.

This is also true of when fibrous pulp is incorporated as mentioned above. That is, when it is found desirable to add a large amount of the fiber to a plaster stock, an extremely excess amount of water is needed to prevent slurry viscosity against buildup. In this case, much water is left included in a plasterboard obtained by continuous cast molding as will be described later. Also in the case of a pulping method, poor dewatering while in press dewatering involves much water having remained in the plasterboard. In each such instance, the finished plasterboard brings about reduced strength that arises from decreased specific gravity with the result that the strength requirement cannot be improved as desired. Besides and obviously, screw- and nail-holding capabilities get diminished on account of saved weight of the plasterboard. Increases in kneading water invite increased residual water and eventually need added heat energy in drying the plasterboard. In the pulping method in particular, use of a fibrous material of low dewatering produces a steep drop in pulping efficiency.

Those methods known to bring a fibriform pulp and a plaster stock into integrally composite form are problematic in many respects as discussed above, and hence are far from countermeasures effective for improving various physical properties such as bending strength, screw- and nail-holding capabilities and the like. To provide a plasterboard with high specific gravity absolutely necessary for sound insulation, an urgent need exists for a technique of decreasing the amount of water to be added to a plaster slurry and also for a slurry composition to be obtained from the thus prepared slurry. No effective means to be adopted for industrial application has been found to date.

Today, this country has been blessed with an information society. Newspapers, magazines, advertisements and like materials as transfer media of information have been more and more increasing on a global scale. Because of the progress of electronic recording devices, magnetic recording materials such as cassette tapes, floppy disks and the like are also in wide use. For the sake of convenience or efficiency in fields of traffic facilities and financial organizations and so on, a prepaid system has advanced with eventual consumption of, in an enormous number, magnetic recording materials such as tickets, telephone cards and the like.

Public focuses have nowadays been centered on environmental protection so that many sectors of industry have begun with tackling the matter of recycling with effort. This directs attention to reuse of various waste materials such as newspapers, OA papers, polyvinyl chloride sheets, tapes, floppy disks and the like. For example, however, magnetic wastes have today been disposed as they are and in large amounts since no means are established for reuse of the same. Agricultural greenhouse sheets formed of polyvinyl chloride sheets have also been employed in large quantities, but they generate harmful gas upon incineration as wastes and hence have been treated generally as single-use. Consequently, there is a growing need for a technique of reusing such sheet-like materials from a consideration of saved resource, protected environment and reduced waste.

A principal object of the present invention resides in the provision of a composite plasterboard which is capable of obviating the aforementioned problems of the prior art and which is not only excellent in respect of bending strength and screw- and nail-holding capabilities in particular, but also excellent in regard to production efficiency and sound proofness, and moreover is conducive to providing a method of the treatment of those waste materials lately taken as serious. Further, the invention provides a process for producing such composite plasterboard.

### Disclosure of the Invention

With regard to reuse of the waste papers, magnetic materials and plastic materials previously stated, the present inventors have made continued research to attain a composite plasterboard which offers great improvements in bending strength and in screw- and nail-holding capabilities while holding high specific gravity, finding that when a plaster stock is incorporated with a paper chip and/or a chip body and then oriented in a specific direction, a composite plasterboard can be provided which meets with bending strength and screw- and nail-holding capabilities required for plate-like building materials. It has also been found that when a plasterboard composition is used with a specifically formulated plaster stock incorporated therein, a composite plasterboard can be obtained which excels in production efficiency and sound insulation, both exerted by the fluidity of the mating plaster slurry. The present invention has now been completed based upon the above findings.

Namely, the present invention provides a composite plasterboard comprising a plaster stock and a filler incorporated therein, characterized in that the filler is selected as essential components from a paper chip and/or a chip body, and the filler is oriented to lie substantially in parallel with a plane perpendicular to the thickness direction of a composite plasterboard to be formed.

In another aspect, the invention provides such composite plasterboard characterized in that the plaster stock is composed of 100 parts by weight a gypsum semi-hydrate and 10 - 250 parts by weight of a gypsum dihydrate.

In still another aspect, the invention provides such composite plasterboard characterized in that the chip body is coated with a coupling agent, and a matrix of the plaster stock comprises an aqueous adhesive.

In still another aspect, the invention provides such composite plasterboard characterized in that the chip body is based on a magnetic material or a plastic material.

In still another aspect, the invention provides such composite plasterboard characterized in that the coupling agent is added in an amount 0.01 - 3% by weight based on the weight of the plaste stock.

In still another aspect, the invention provides such composite plasterboard characterized in that the aqueous adhesive is added in an amount of 3 - 20% by weight based on the weight of the plaster stock.

In still another aspect, the invention provides such composite plasterboard characterized in that the paper chip and/or the chip body is added in an amount of 0.2 - 25% by weight based on the weight of the plaster stock.

In still another aspect, the invention provides such composite plasterboard characterized in that the paper chip and/or the chip body has a planar portion dimensioned to be 1 mm x 1 mm - 50 mm x 50 mm.

In still another aspect, the invention provides such composite plasterboard characterized in that the paper chip and/or the chip body has a long side/short side ratio of 1 - 10.

Further, the present invention provides a process for producing a composite plasterboard, characterized in that the process comprises mixing a plaster stock, a paper chip and/or a chip body, water and, where desired, a filler, supplying the resultant plaster slurry on to a movable conveyor, causing the conveyor to move, and orienting the paper chip and/or the chip body, by use of orienting means, to lie substantially in parallel with the plane perpendicular to a thickness direction of a composite plasteboard to be formed.

Further, the present invention provides a process for producing a composite plasterboard, characterized in that the process comprises mixing a plaster stock, a paper chip and/or a chip body, water and, where desired, a filler, charging the resultant plaster slurry in a tank having a mesh drum mounted thereon, sucking an air contained in the mesh drum to thereby deposit the plaster slurry on the mesh drum, and orienting the paper chip and/or the chip body to lie substantially in parallel with the plane perpendicular to a thickness direction of the composite plasteboard to be formed.

Further, the present invention provides a composition for plasterboard use which comprises a plaster stock, water and, where desired, a filler, characterized in that the plaster stock comprises 100 parts by weight of a gypsum semi-hydrate and 10 - 250 parts by weight of a gypsum dihydrate based on the weight of the plaster stock.

Further, the present invention provides a process for producing a composite plasterboard which comprises covering a core material on both of its two sides with two base papers for plasterboard use, the core material being composed predominantly of a paper chip and/or a chip body, characterized in that the process further includes casting a plaster slurry in between the base papers, the plaster slurry being composed of 10 - 250 parts by weight of a gypsum dihydrate based on 100 parts by weight of a gypsum semihydrated.

### Brief Description of the Drawings

Fig. 1 is a schematic view taken to explain those process steps related to a cast molding process.

Fig. 2 is a schematic view taken to explain those process steps related to a pulping process.

The present invention will be described below in greater detail.

### (Paper Chips and Chip Bodies)

As starting materials of paper chips eligible for the invention, there may be used newspapers, folders, books such as paperbacks and the like, and papers for general use such as copying papers, printing papers and the like and waste papers thereof, and papers separated from scraps, waste products and losses of building materials (for example, plasterboards using cardboards). Additionally, corrugated boards, wrapping papers and working papers and wastes thereof may be suitably useful. To add to those papers and wastes thereof, waste products and shreds made available during production of such papers may also be utilized.

Chip bodies suitable for the invention include, for example, floppy disks, recording tapes, magnetic video tapes, various tickets, horse racing tickets, agricultural sheets, nonwoven fabrics, woven fabrics and the like and wastes thereof, and sheet-like chips separated from scraps, waste products and losses.

The term paper chip or chip body used herein (often referred to simply as "chip" where relevant hereunder) denotes a paper material or a chip body previously stated and properly sized such that a composite plasterboard is provided with desired physical properties.

The dimension of the paper chip or chip body can be selectively decided with regard to the strength and kind of a desired composite plasterboard. Desirably, the paper chip or chip body should have a planar portion dimensioned to be larger than 1 mm x 1 mm. This planar portion should be preferably in the range of 1 mm x 1 mm - 50 mm x 50 mm, more preferably of 3 mm x 3 mm - 10 mm x 10 mm in the case of the paper chip and of 3 mm x 3 mm - 25 mm x 25 mm in the case of the chip body. Greater planar portions than 1 mm x 1 mm in the chip are effective in avoiding a plaster slurry from becoming less fluid while in mixing of the chip with a plaster stock. Above 50 mm x 50 mm is in some instances responsible for folded chip in process steps and hence for reduced fluidity of the plaster slurry. When the dimension of the planar portion in the chip is set as noted above, the chip gives reduced specific surface area, hence decreased water absorption, with the consequence that even a small amount of kneading water enables a highly strong composite plasterboard to be attainable.

The thickness of the paper chip or chip body exerts an effect upon interlaminar separation of the chip. In the case where a composite plasterboard of a large thickness is desired, the mating chip should preferably be likewise made thick. When a composite plasterboard is desirable with a small thickness, a thin chip may be selectively useful. To be more specific, when a composite plasterboard is as thick as about 20 - 30 mm, a chip of 0.5 - 2 mm in thickness is preferable. When a composite plasterboard is as thin as about 5 - 20 mm, a chip of 0.05 - 0.5 mm in thickness is preferable.

The shape of the paper chip or chip body may be, though not restrictive, square, rectangular, circular, triangular or any other different shape. However, the length to width ratio of the chip is too large, say like a strip-like shape, the resultant plaster slurry is adversely highly viscous.

The paper chip or chip body should have a long side/short side ratio in the range of 1 - 10, preferably of 1 - 3. Larger ratios than 10 invites entanglement of chips with each other in a plaster slurry, wheres below 10 in this ratio avoids the resultant plaster slurry against viscosity buildup. A chip of a smaller ratio than 10 is easy to form and transport. The long side and short side used herein may be paraphrased to refer to, respectively, a longitudinal direction and a horizontal direction.

No particular restriction is placed upon those methods employed in forming the paper chip or chip body. A dry grinding method and a wet grinding method, both known in the art, may be illustrated for example as industrial means. Since the chip should be desirably of a uniform size, the operating conditions of a grinder used may be selectively preset. For instance, the screen diameter may be adjusted in the dry grinding method, and the stirring and grinding times may be adjusted in wet grinding method.

In the present invention, the paper chip or chip body may be subjected, where needed, to surface treatment and fuzzing. This surface treatment serves to further increase adhesion between the paper chip and the chip body, thus enhancing those advantages afforded by the invention.

Now, in the case of use of a magnetic material and a plastic material as the chips, both materials show poor affinity (adhesiveness) for a plaster stock. Even if the two chips are allowed to be present as they are in a plaster slurry, the finished composite plasterboard cannot produce sufficient mechanical strength. In employing the magnetic material and plastic material as the chips, therefore, the plaster stock should be formulated with an aqueous adhesive, whereas the chip body should be coated with a coupling agent. Desirably, doing so permits a series of formations from adsorption to bonding, namely a chip body - coupling agent - aqueous adhesive - plaster stock. Details are described hereunder.

The aqueous adhesive and coupling agent for use in such instance can be chosen from any suitable combinations of their kinds with the kind of chips. For instance, for the aqueous adhesive, hydrophilic group-containing adhesives of a polyalcohol class, a water-soluble polymer class, an emulsion class and the like may be used. More specifically, there may be illustrated those of water-soluble or emulsion-type such as for example acryl, vinyl, phenol, urea-formaldehyde, epoxy, starch, melamine, rubber and so on.

Moreover, for the coupling agent, there may be used coupling agents known in the art and chosen from a silane class, a titanium class, a titanate class and the like. To be more specific, silane coupling agents include vinyl trimethoxysilane, γ-glycidoxypropyltrimethoxysilane and so on, titanium coupling agents include those having functional groups of an amine type, a carboxylic acid type, an acryl type, a phenol type and so on, and titanate coupling agents include isopropyl trititanate, isopropyltriisostearoyl titanate, isopropyltrioctanoyl titanate and so on.

The aqueous adhesive and coupling agent should be selectively combined according to the material of chips used. For example, in the case of a plastics-based chip, polyvinyl alcohol or modified vinyl acetate may desirably be used as the aqueous adhesive, and a long-chain alkyl group-containing metal alkoxide may desirably used as the coupling agent. In the case of a chip coated with a magnetic material of a metal oxide type such as iron oxide or the like, an emulsion type adhesive such as polyvinyl acetate, acryl emulsion or the like may be desired as the aqueous adhesive, and alkyl titanium, alkyl titanate or alkoxy silane may be desired as the coupling agent.

At all events, the aqueous adhesive is used to promote bonding between a plaster stock and a coupling agent, and the coupling agent to promote bonding between a chip and an aqueous adhesive. Combinations of the aqueous agent and the coupling agent may be optional so long as such bondability is attainable.

The paper chip or chip body can be prepared simply by cutting or pulverizing a paper or sheet with use of any suitable means. This preparation is achievable with lesser energy consumption than fibrillation of a pulp or waste paper.

### (Plaster Stocks)

Plaster stocks useful in the present invention are not particularly restrictive so long as they are materials of a plaster character that act as matrices capable of holding paper chips in dispesed condition. Exemplified are dry gypsum, α type gypsum semihydrated, III type gypsum anhydride and the like which are commonly used, and slag gypsum, gypsum dihydrated, II type gypsum anhydride and the like which are conventionally employed. For example, gypsums of a hydration hardening type include dry gypsum, α type gypsum semihydrate, III type gypsum anhydride and II type gypsum anhydride. These gypsums change into a gypsum dihydrate through hydration in the presence of water and then harden. They have their respective different hydration activities and hardening times and hence may be selectively used singly or in combination in accordance with those conditions of mixing times, operating speeds and the like preset in a production process used.

Advantageously, however, the plaster stock should have the following composition in providing a plasterboard of great production efficiency and high sound isulation which result from the fluidity of a plaster slurry; that is,

A gypsum dihydrated in an amount of 10 - 250 parts by weight, preferably of 10 - 50 parts by weight, based on 100 parts by weight of a gypsum half-hydrated.

The gypsum dihydrated includes chemical gypsums such as ashed gypsum, natural gypsum, phosphoric gypsum and so on. Owing to their varying particle sizes, such gypsums may preferably be ground or classified to gain a desired fluidity of a plaster slurry, which fluidity is affected by the particle sizes of particulate starting materials used. Ashed gypsum and phosphoric gypsum for example are supplied usually in powdered form and hence are not required to be ground or classified so that they are particularly preferred for the practice of the present invention. Natural gypsum and the like are produced in block form and should be ground to adjust their particle sizes. In this embodiment of the invention, a gypsum dihydrate or a base material for a gypsum semihydrate is used to advantage without calcination with the result that calcination energy is cut which is needed to form a gypsum semihydrated. Various types of gypsums dihydrated are variable in water content with the forms in which they are produced. In the case of calcination of a gypsum semihydrated, a drying step needs to be assembled to dry the same in advance. According to this embodiment, a gypsum dihydrate in hydrous condition can be employed as it is with eventual reduction in drying energy. Further, use of such a hydrous gypsum dihydrate allows for the total supply amount of water to be counted by subtracting the water content of the same. This favorably leads to reduced amount of water to be supplied.

Various starting materials for use in the present invention can be mixed with each other by means of any known techniques which may be properly selected in consideration of the conditions of a production method used and the applications and properties of a composite plasterboard to be prepared. Each starting material may be used in combination.

### (Mixing Ratios)

The mixing ratio of a paper chip to a plaster stock may be chosen according to the dimension, application and the like of a composite plasterboard to be obtained. For instance, it is desired that in order to greatly improve bending strength and screw- and nail-holding capabilities of a composite plasterboard, the paper chip be added in an amount of 0.2 - 25% by weight, preferably of 2 - 10% by by weight, more preferably of 5 - 8% by weight, based on the weight of the plaster stock. When it is found desirable, in addition to the above improvements, to increase the ratio of a waste paper to be reused, the paper chip may be added in amounts of larger than those noted above, for example, of 10% by weight. Due to its combustible nature, the paper chip gives to a composite plasterboard low fire resistance that depends upon the amount of the former. In general, the paper chip is added in a target amount of less than 5% by weight for a noncombustible grade, in a target amount of less than 25% by weight for a quasi-noncombustible grade and in a target amount of less than about 50% by weight for a fire-retardant grade. These ratings of fire resistance are stipulated by JIS A1321 and A1322 or by Notice No. 1828 and No. 1231 issued by the Construction Ministry.

Additionally, the mixing ratio of a chip body to a plaster stock may be chosen according to the dimension, application and the like of a composite plasterboard to be obtained. It is desired, for example, that to make marked improvements to bending strength and screw- and nail-holding capabilities of a composite plasterboard, the chip body be added in an amount of 0.2 - 25% by weight, preferably of 2 - 10% by weight, more preferably of 5 - 8% by weight, based on the weight of the plaster stock. If it is found desirable, in addition to the above improvements, to increase the ratio the ratio of a waste-based chip body to be reused, the chip body may be added in amounts of more than those noted above. In that event, however, attention should be paid to the fire resistance of the finished composite plasterboard.

The mixing ratios of an aqueous adhesive and a coupling agent may be chosen according to the dimension and application of a composite plasterboard to be obtained and the kind of chemicals used. For example, the aqueous adhesive may be added in an amount of 3 - 20% by weight, preferably of 3 - 10 % by weight, based on the weight of a plaster stock, and the coupling agent in an amount of 0.01 - 3% by weight, preferably of 0.1 - 1% by weight, based on the weight of the plaster stock.

### (Other Fillers)

In order to improve desired physical characteristics, a filler other than a paper chip and a chip body can be incorporated in the composite plasterboard of the present invention. For example, use may be made, where needed, various fillers employed for a conventional plasterboard, such as water reducers, retarding agents or sizing agents. Where weight saving, incombustibility quality and high strength are desired, various secondary components may be added to a primary or basic formulation composed of a plaster stock and a paper chip, which secondary components include aggregates, flame retardants, binders and so on. Specific examples include saw dust, chipped wood, perlite, vermiculite, starch, PVA, starch oxide and so on. As is conventionally practiced for compositeness, fibrous materials such as pulp fiber, glass fiber, rock wool and the like may also be incorporated to further improve strength or fire resistance. Since these fibrous materials frequently render the resultant plaster slurry less fluid, the slurry should be improved in its fluidity by addition of a water reducer or by surface treatment of a fibrous material used. Chopped strands of glass fiber are preferred among other suitable fillers.

The other filler may be added in an amount of about 0.1 - 3% by weight based on the plaster stock.

### (Basic Papers for Plasterboard Use)

In the present invention, a plaster hard body can be interposed between two base papers for plasterboard use in conventional manner, whereby a building material is formed. Here, the base papers for plasterboard use may be those with varying substances, with varying permeabilities as by surface treatment, with flame retardancy treatment, with surface decoration and with various other forms. They are easily commercially available.

These base papers for plasterboard production serve as a mold for filling of a plaster slurry. The composite plasterboard of the present invention can be obtained from a plaster slurry treated to have sufficient fluidity, and hence may be adapted to base papers of any kind, or molds of any shape.

### (Production of Composite Plasterboard of the Invention)

The composite plasterboard of the present invention should have a paper chip and/or a chip body oriented to lie substantially in parallel with a plane perpendicular to a thickness direction of a composite plasterboard to be formed. The chip is not necessarily needed to orient in its total amount of 100%, but may be oriented in such a ratio as to improve the bending strength and screw- and nail-holding capabilities of a composite plasterboard to be produced. For example, even when the paper chip added is oriented in an amount of about 50% in a different direction, nothing inconvenient takes place for practical purposes.

Orienting means may be such capable of orienting the chip in a given direction. The chip can also be oriented by charging a plaster slurry in between two base paper for plasterboard use, followed by application of pressure in an suitable amount on to the slurry from the top such that the slurry is pressed to a given thickness. Additionally, use may be made means capable of adjusting the thickness of the plaster slurry, such as-for example a leveling roll and so on.

In the case of use of an aqueous adhesive in combimation with a coupling agent, a chip should be coated on its surface with the coupling agent as stated above. This coating may be effected for example by spraying the coupling agent on to the chip, or by impregnating such agent in the chip. The coupling agent-coated chip may be then dried, heated or otherwise treated, where needed, and put into a plaster stock. An aqueous adhesive is further added to the plaster stock, or a chip is incorporated in a plaster slurry to which an aqueous adhesive has been added.

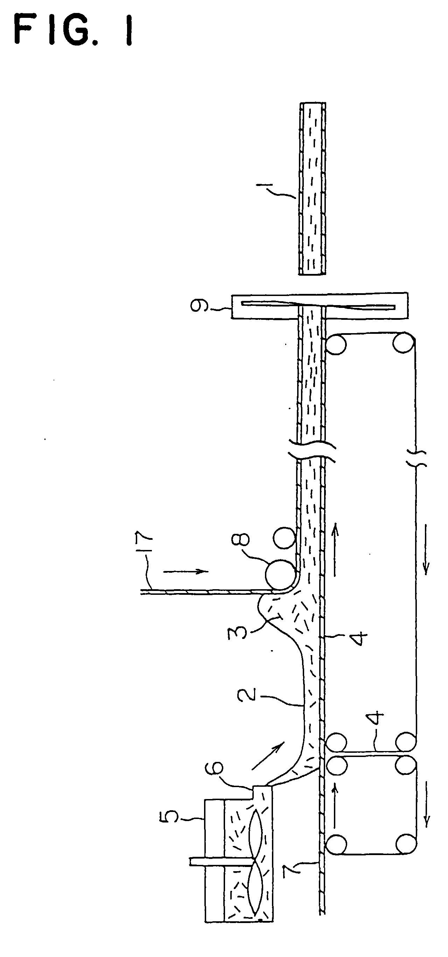

No particular limitation is not imposed on those processes used to produce the composite plasterboard of the present invention so long as the associated chip is oriented in a specified direction as described above. Preferred processes are given below.
(1) Continuous Cast Molding Process: In a container equipped with a stirrer are placed a chip, water and, if necessary, a filler, and the whole is mixed into a slurry which is then allowed to continuously flow on to a traveling conveyor. The slurry is then let to have a given dimension and subjected to cutting and drying, whereby a composite plasterboard is obtained.
   This process is further described with reference to Fig. 1. This figure is a schematic view taken to explain those process steps related to the continuous cast molding process. Starting materials are put into a container 5 equipped with a continuous mixer and mixed with stirring to thereby prepare a slurry 2. This slurry 2 is caused to continuously flow out of an outlet 6 of the container on to a traveling conveyor 4. A base paper 7 for plasterboard use are disposed on the traveling conveyor 4 and are being traveled together with the latter. The slurry 2 arrives at orienting mean or leveling roll 8 and undergoes leveling to a given thickness thereat. A paper chip 3 left unoriented is then pressed, along with the slurry 2, against another base paper 17 for plasterboard use and oriented to lie along the slurry 2 and substantially in parallel with a plane perpendicular to a thickness direction of a composite plasterboard 1 (this plane being hereunder called a longitudinal plane where relevant). Subsequently, a composite plasterboard in slurry form is traveled as it is for a predetermined length of time (for example, 2 minutes), solidified and cured to some extent, and cut to a given dimension by means of a cutter 9 and passed through a drying step. Thus, the composite plasterboard 1 of the present invention is provided.
   Advantageously, such a continuous cast molding process is highly productive and less costly.
(2) Pulping Process: Into a tank equipped with a mesh drum is pot a slurry prepared by uniformly kneading a chip, water and, if necessary, a filler. An air contained in a mesh drum body is sucked with use of any suitable means, and the slurry is allowed to adhere on to an outer surface of the mesh drum. The resultant slurry laminate is coiled which is thereafter passed through cutting, press dewatering and drying steps so that a composite plasterboard is obtained.

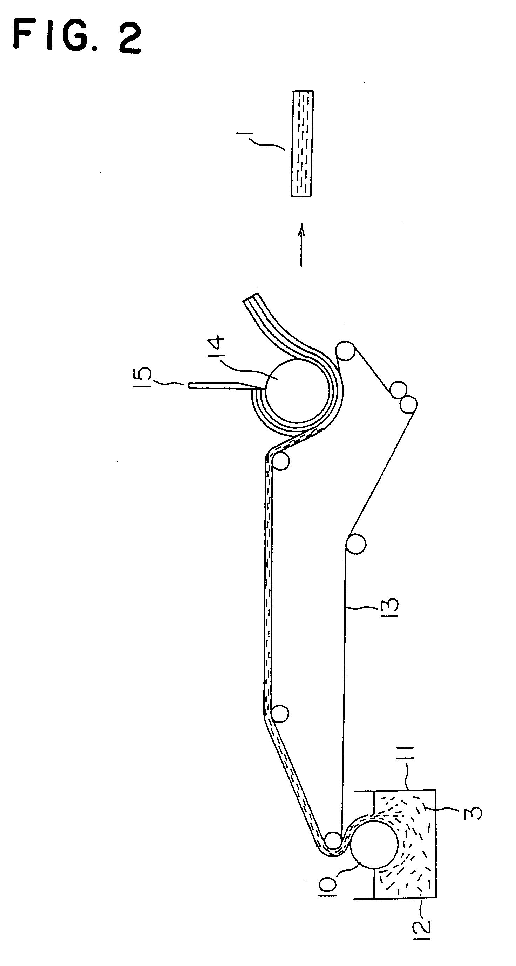

This process is further described with reference to Fig. 2. This figure is a schematic view explanatory of various process steps in regard to the pulping process. Firstly, a plaster slurry 12 is put together with additional water into a tank 11 equipped with a mesh drum 10. The mesh drum 10 may be a drum of a net-shaped formation from a wire material. Next, upon suction of an air contained in the mesh drum 10 with use of suitable means, the water is caused to include in the mesh drum so that the plaster slurry 12 successively deposits on the mesh drum 10. As a result of this deposition, a paper chip orients generally in parallel with the longitudinal direction of a composite plasterboard. The plaster slurry thus deposited is transferred on to a felt belt 13 so as to further remove its water content and then wound up on a windup roll 14. On reaching to a given thickness, the resulting slurry is cut to a suitable length by means of a cutter 15 and subjected to press dewatering and drying steps, whereupon a composite plasterboard 1 is obtained. In plasterboard production based on a known pulping method, a fibrous pulp is always used. Such fibrous pulp poses the problem that it shows high water retention, thus inviting poor dewatering. With use of the paper chip according to the present invention, this paper chip is less absorptive to water and hence conducive to speedy filtration in a pulping step. In plasterboard production by the pulping process, a slurry deposit is press-dewatered into plate form. In that event, the paper chip is so small in water absorption that it is susceptible to fast dewatering with the consequence that a highly strong plate material is easily obtainable.

Because the chip is oriented generally in parallel with a longitudinal direction of a composite plasterboard to be formed, bending strength and screw- and nail-holding capabilities can be enhanced to a noticeably great extent. In the above pulping process, the chip is easy to orient in a desired direction. However, if made to have too large a dimension, the chip might lie, by accident, perpendicularly of the thickness direction of the composite plasterboard to be provided. In consequence, the chip should be selected in an appropriate range of dimensions.

Desirably, the composite plasterboard thus obtained may be set to have a specific gravity usually of 0.5 - 1.6 g/cm³, preferably of 0.7 - 1.5 g/cm³.

Next, the present invention is described with regard to its operations and advantages.

According to the invention, a filler is incorporated as an essential component and along with a paper chip and/or a chip body in a composite plasterboard. Thus, the bending strength and screw- and nail-holding capabilities of the composite plasterboard are sharply improved as compared to the prior art. This would presumably be attributable to the following reasons.

In a certain instance of the prior art, a fibrillated pulp has been employed as a filler. This method invites a sudden decline in kneading at the time of production. That is, such fibrous material is great in specific surface area, fine in shape and high in bulkiness and hence retentive of water with the result that the resultant plaster slurry is susceptible to sudden viscosity buildup. In the prior art, therefore, the fibrous material can be added only in an amount of about 0.1 - 2% or about 3% at most, and this fails to so much improve the bending strength and screw- and nail-holding capabilities of the finished plate. In contrast, the chip for use in the present invention is remarkably smaller in specific surface area and by far lower in water absorption than the fibrous material of the prior art. This means that no steep viscosity buildup is found in the resultant plaster slurry, and the chip can be added in a sufficient amount to a plaster stock with addition of kneading water in a small amount. Thus, the bending strength and screw-and nail-holding capabilities are greatly improved. In addition, since only a small amount of water remains in the finished composite plasterboard, this latter board can be prevented against reduced strength caused by saved weight. At the same time, increased drying energy in the case of use of water in a large amount can be avoided with ultimate achievement of improved economy. Additionally, in plasterboard production by the pulping process, a chip of low water absorption is useful so that speedy filtration and press dewatering are possible in pulping steps with enhanced dewatering efficiency. The fibrous material of the prior art involves, owing to its fineness and bulkiness, increased transport cost or metering difficulty, whereas the chip according to the present invention has cleared up those problems.

Furthermore, in the case of use of a gypsum dihydrate, the fluidity of a plaster slurry is markedly improved as mentioned above. This is attained by taking advantage of the feature of the gypsum dihydrate which accounts for a dense crystalline structure as compared to a gypsum semi-hydrate. The gypsum semihydrate results usually from calcination at 140 - 160°C and hence has a multiplicity of fine voids that occur after liberation of the water of crystallization of the former. Besides, this gypsum is recognized to be great in strain tending to take place in its crystal during dehydration and, upon placement in water, is readily degraded into a particulate shape. Generally, void-rich powders and fine particles are large in specific surface area and hence are highly hydrophilic, and are retentive of much water while in kneading. This is also true of gypsums, and the gypsum semihydrate in particular needs, due partly to the above stated phenomenon of becoming particulate, a large amount of water to gain fluidity at the same level as in cement. To attain sufficient casting, therefore, a gypsum semihydrate for inductrial purposes is incorporated with almost the same quantities as stipulated by JIS R9112 to thereby ensure its fluidity. On the other hand, a gypsum dihydrate that is a starting material for the above gypsum semihydrate is denser than the gypsum semi-hydrate and is not likely to become particulate even in water. Hence, the particle characteristics of the gypsum semihydrate can be improved by combination with the gypsum dihydrate. In the practice of the present invention, the fluidity of a plaster slurry is markedly improved by addition of a gypsum dihydrate so that water may be added in the least possible amount to enable casting as desired. Hence, since the amount of water to be used is considerably reduced as compared to a conventional case, drying energy can be saved in removing excess water for hydration, coupled with formation of a hard body of a higher strength and a larger specific gravity.

In further consideration of the reuse of resources that has of late become serious, a need continues to exist for building materials having waste papers and waste plastic sheets incorporated therein in larger amounts. However, conventional techniques encounter limited amount of use of those wastes. In particular, chip bodies prepared from floppy disks, cassette tapes, polyvinyl chloride sheets for agricultural use, or tickets coated with magnetic materials are highly durable in nature. When such a chip body is oriented to lie generally in parallel with a plane perpendicular to a thickness direction of a board made of a plaster hard body, the finished board is thought to hold screws, nails and the like in firmly bitten condition. In practice, however, the chip body has disposed on its surface a plastics or a magnetic material that shows, by nature, poor affinity (adhesion) for a plaster stock. Consequently, even if the chip body is allowed to be present as it is in a plaster slurry, the resultant composite plasterboard cannot in any way afford sufficient mechanical strength. An aqueous adhesive, unlike a nonaqueous adhesive, is well adhesive to the plaster stock and, on addition to the plaster slurry, is easily capable of improving the strength characteristics of a plaster hard body. However, adhesion to the chip body of low affinity for water is not expectant. According to the present invention, a coupling agent is used which is adsorptive to both of the aqueous adhesive and the chip body. The coupling agent is applied to the chip body on its surface to thereby provide a series of adsorption - bonding formations, namely of chip body - coupling agent - aqueous adhesive - plaster stock. This enables conspicuous improvements to be made to the screw- and nail-holding capability of a composite plasterboard which were originally made impossible. Meanwhile, prepaid cards and magnetic materials are formed generally by coating an electromagnetic wave-absorbing material on a paper- or plastics-based sheet. When they are chipped and used in the present invention, it can be expected that electromagnetic wave-masking properties are imparted to the resultant plaster hard body in a board shape as is known in the art. In the invention, since the chip body is oriented to lie generally in parallel with a plane perpendicular to the thickness direction of a composite plasterboard to be formed, the magnetic material coated on the chip body is so disposed in an areal posture that electromagnetic wave-absorbing capacity is further enhanced, and improved screw- and nail-holding capabilities are also expected. Thus, composite plasterboards of the invention are attainable various properties according to the characteristics of chip bodies used.

As described hereinabove, the present invention permits use of inexpensively prepared paper chips and/or chip bodies in larger amounts where desired, and use of materials of various kinds and shapes, for example, those completely separated, intermixed with other papers, or intermixed with various wastes other than waste papers. Thus, the invention is advantageous in regard to the reuse of resources.

### Best Mode of Carrying Out the Invention

With reference to inventive examples and comparative examples, the present invention is further described below. The invention should not be considered limited to these examples.

The measurements of various characteristics indicated in the inventive and comparative examples are made by the following procedures unless otherwise noted.
Bending Strength: A specimen dimensioned to be 5 cm in length x 20 cm in width x 1.2 cm in thickness was prepared from an inorganic composite board produced. Loading was effected by three-point bending with use of an Instron universal tester. Measurement was made with a support-to-support distance of 15 cm and a loading speed of 2 mm/min.
Nail-Holding Capability: Evaluation was made with use of a N50 nail stipulated as "Iron Circular Nail" by JIS A5508 and in accordance with "Test Method of Nail Drawing Resistance in Wood" defined by JIS Z2121.
Screw-Holding Capability: Evaluation was made with use of a wood screw of d = 2.7 mm and L= 16 mm stipulated as "Cross-Grooved Wood Screw" by JIS B1112 and in accordance with "Particle Board" defined by JIS A5908.
Slurry Fluidity: A slurry mixture was filled in a cone employed in surface-drying thin skeletons for concrete use, followed by gentle drawing of the cone. Judgement was done by the spreadability (flow value) of the resulting slurry.

Those starting materials used in Inventive Examples 1 -9 below and Comparative Examples 1 - 3 below were indicated hereunder.
plaster stock: calcined gypsum (Nippon Plasterboard Co. Ltd., standard mixed water 65%)
paper chip: Use was made of chips obtained by dry-crushing a waste PPC paper disposed from general offices, a waste newspaper or a waste magazine with use of a turbo cutter (Turbo Industries Co., Ltd., screen diameter 5 mm). The dimension was about 2 mm x 2 mm and 5 mm x 5 mm, and chips of 10 mm x 10 mm and 50 mm x 50 mm were also prepared with 4 kinds in all. The crushed PPC paper was not of a fibrillated type and was about 100 µm in thickness.
water reducer: a water reducer of a naphthalene sulfonate type.
foaming agent: Emul (Kao Co., Ltd.).
binder: starch oxide (Nippon Corn Starch Co., Ltd.).

### Examples 1 - 9

According to the mixing ratios of starting materials and the dimensions of paper chips shown in Table 1, composite plasterboards of the present invention were produced by a continuous cast molding process. The mixing ratio of each starting material listed in Table 1 is % by weight with the weight of a plaster stock taken as 100. The plaster stock actually tested was 10 t/hr.

In regard to the conditions under which to carry out the continuous cast molding, a plaster slurry placed in a container was stirred by means of a pin mixer, the width of a traveling conveyor was 90 cm, the traveling speed was 18 m/min, and the flow rate of the slurry was 18 t/hr. As seen in Table 1, the slurry was covered on its upper and lower sides with two base papers for plasterboard use. Immediately after the continuous cast molding, the slurry adjusted to a predetermined dimension was hardened via a drying step in which curing had been conducted at 140 °C for 30 minutes by a hot air dryer.

The resultant composite plasterboard was dimensioned to be 90 cm in width x 180 cm in length x 1.25 cm in thickness. Tabulated in Table 1 are the results of various characteristics measured for the composite plasterboard.

### Comparative Example 1

By the same continuous cast molding process as in Example 1 except that the paper chip was omitted, a composite plasterboard was produced. This plasterboard is in conventional use as an internal wall material and the like. Tabulated in Table 1 are the results of various characteristics measured for the composite plasterboard.

### Comparative Example 2

The procedure of Example 1 was repeated except that a fabrillated pulp (fiber length about 1.5 µm, fiber width about 20 µm) was used in place of the paper chip, but in accordance with the mixing ratios of Table 1. In this comparative example, a fibrillated pulp retentive of water was employed, and hence, water was added in a larger amount. Tabulated in Table 1 are the results of various characteristics measured for the resultant composite plasterboard.

### Comparative Example 3

The procedure of Example 1 was repeated except that the paper chip was omitted, and water was added in a smaller amount so as to enhance the specific gravity of the resultant composite plasterboard as shown in Table 1. Tabulated in Table 1 are the results of various characteristic measured for the composite plasterboard.

A paper chip a waste OA paper was used in Examples 1 - 7, a chip of a waste newspaper in Example 8, and a chip of a waste magazine in Example 9.

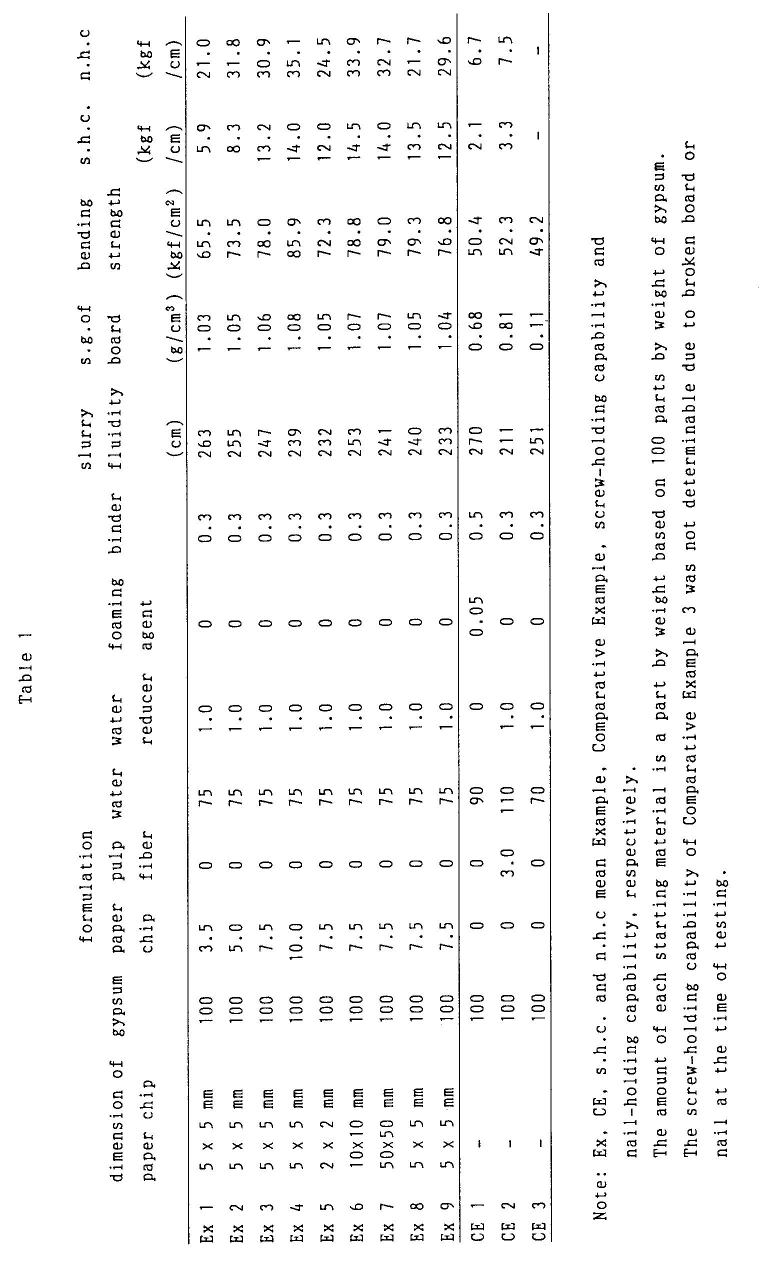

Examples 1 - 4 each having a paper chip incorporated therein show a markedly great rise in bending strength and screw- and nail-holding capabilities. Despite water added in a small amount, slurry fluidity suited for practical application has been attained. Additionally, the composite plasterboard has a great specific gravity, thus contributing to improved characteristics.

As contrasted to those examples, Comparative Example 1 having omitted the paper chip invited a low level of both of bending strength and screw- and nail-holding capabilites.

Comparative Example 2 used a fibrillated pulp as a filler. Because of increased amount of water, neither bending strength nor screw- and nail-holding capabilities were sufficient.

Comparative Example 3 used decreased amount of water to increase the specific gravity of the plasterboard. While exhibiting a high bending strength, the plasterboard caused, owing to absence of a paper chip, threaded failure of a screw and breakage by striking a nail or bent nail at the time of testing, consequently failing to warrant practical application.

Examples 5 - 7, the paper chip was tested with varying dimensions. All of the tested dimensions have produced excellent results.

Examples 8 and 9, the paper chip was tested with the starting materials for the paper chip varied. Both of the tested dimensions have produced excellent results.

To clearly demonstrate the effects of a gypsum dihydrate upon the fluidity of a plaster slurry and upon the strength of a board, a further inventive example is given in which the gypsum dihydrate is combined with a gypsum semi-hydrate.

As the starting materials, the gypsum semihydrate used was a calcined gypsum for board purposes manufactured by Nippon Palsterboard Co., Ltd. (Blain specific surface area = 4530 cm²/g, amount of mixed water based on JIS R9112 = 81%).

The gypsum dihydrates used were, as typical types, 4 desulfurnized gypsums, 2 phosphoric gypsums and one natural gypsum. The particle characteristics of each each gypsum dihydrate are shown in Table 2.

The numerical values shown here are the specific surface areas measured by use of a Blain method, the particle diameters by a particle distribution measuring tester of a laser diffraction type, the specific gravities by a Picno meter of a nitrogen replacement type, and bound waters by thermal analysis.

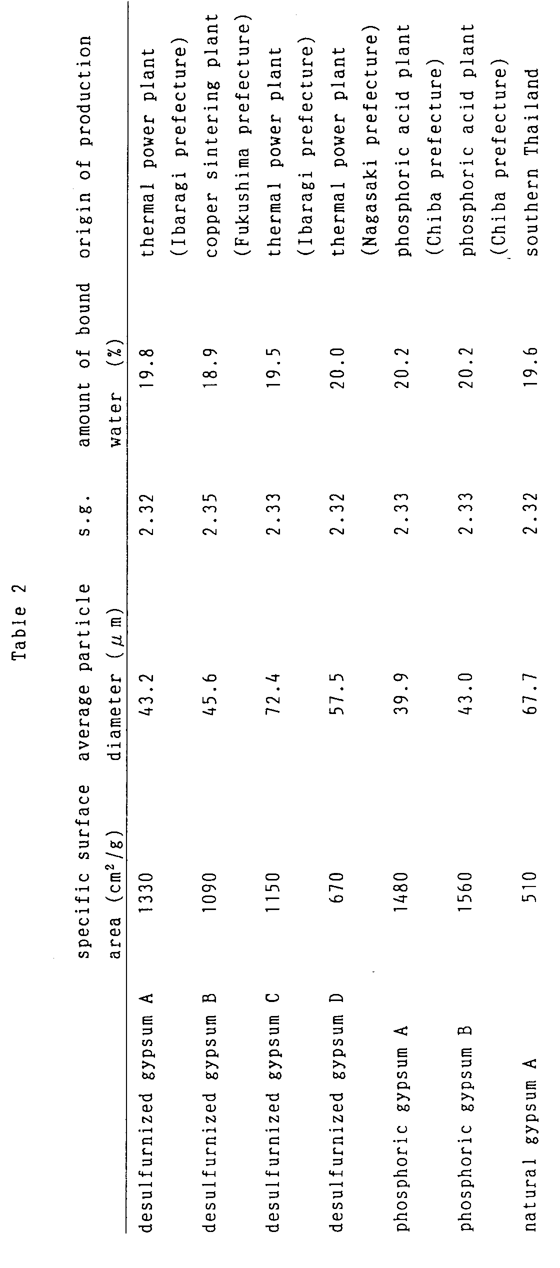

The plasterboard according to the invention was produced in the following manner.

Firstly, a plaster slurry used in forming a core material for a plasterboard was prepared by dry-mixing a gypsum semihydrate and a gypsum dihydrate in a selected ratio. The mixture was then incorporated in an amount of 1500 g with water in a given amount and mixed for 20 seconds by a hand mixer. This slurry was immediately spread over two base papers for plasterboard use and thereafter formed to a thickness of 10 mm. The plasterboard of the invention was provided by curing the resultant molding for 2 hours in a room, followed by drying of the cured molding at 45 °C for 2 days and by subsequent cutting of the same to a square of 20 cm.

The specific gravity of the plasterboard was counted from the dimensional measurements and weight measurements of a given plasterboard.

Further, the bending strength of the plasterboard was determined by three-point bending with use an Instron universal tester sized to be 5 cm × 20 cm × 1 cm. The results of 3 specimens were averaged.

### Examples 10 - 14 and Comparative Examples 4 - 9

A plasterboard was formed in accordance with those mixing ratios shown in Table 3 and then measured in respect of the above physical properties. The results are tabulated also in Table 3. To facilitate comparison, Comparative Example 4 through Comparative Example 9 were shown in that table, which comparative examples were directed to cases where no base papers for plasterboard use were disposed on both sides of a plasterboard employed as a core material.

For plasterboard production, cast molding is desirable from the viewpoint of productivity. To this end, it is of necessity that a plaster slurry have sufficient fluidity, no separation take place between starting materials, and the finished plasterboard have sufficient softness. Hence, testing was effected here, as a measure of the fluidity required for cast molding, by means of a pipe cone test used to measure a cement slurry. Formulations where a certain flow value such as of 14 cm or 10 cm was gained were tested.

Desulfurnized gypsum A was used as a gypsum dihydrate.

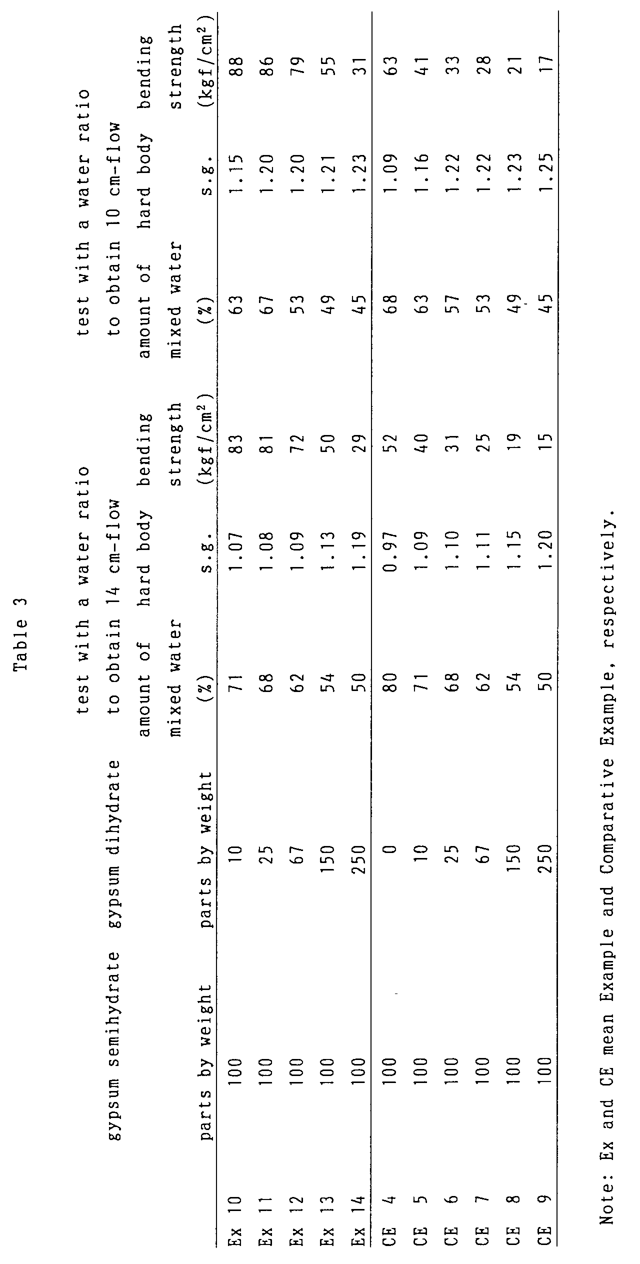

In Examples 10 - 14, desulfurnized gypsum A was added in an amount of 10 - 250 based on 100 parts by weight of a gypsum semihydrated. It has been found that the amount of mixed water is suddenly reduced as compared to Comparative Example 4 in which a gypsum dihydrate was omitted an that one and the same slurry fluidity can be achieved with a smaller amount of water added. It has also been found from Examples 10 - 14 that a board can be obtained with a by far greater strength than the comparative examples wherein the gypsum semihydrate and gypsum dihydrate were mixed under the same conditions as in the above examples. In the prior art technique, the combination of a gypsum dehydrate with a gypsum semihydrate invites a sharp drop in strength as concerns the resulting board, thus requiring addition of a fibrous material and an adhesive. The present invention brings a plaster hard body and base papers for plasterboard use into firmly integral form, greatly improving such prior art phenomenon.

### Examples 15 - 24

A plasterboard was produced in accordance with the mixing ratios of Table 4. Measurement was made of the following physical properties with the results tabulated also in Table 4.

The fluidity of the resulting plaster slurry was adjudged by flow rates. Namely, the slurry was filled in an acryl pipe sized to be ⌀ 4 cm x h 4 cm and disposed on a flat board, followed by gentle pulling up of the pipe, so that the slurry spreads on the flat board. Spreadability was measured at two points and averaged to obtain a flow rate.

**Table 4**

| | gypsum semihydrate parts by weight | gypsum dihydrate parts by weight | ratio of water | flow value (cm) | specific gravity |
|---|---|---|---|---|---|
| Ex 15 | 100 | 10 | 60 | 8.5 | 1.08 |
| Ex 16 | 100 | 25 | 60 | 11.2 | 1.06 |
| Ex 17 | 100 | 67 | 60 | 13.2 | 1.04 |
| Ex 18 | 100 | 150 | 60 | 16.5 | 1.03 |
| Ex 19 | 100 | 250 | 60 | 18.2 | 1.02 |
| Ex 20 | 100 | 10 | 60 | 7.0 | 1.07 |
| Ex 21 | 100 | 25 | 60 | 7.9 | 1.05 |
| Ex 22 | 100 | 67 | 60 | 11.2 | 1.04 |
| Ex 23 | 100 | 150 | 60 | 14.5 | 1.02 |
| Ex 24 | 100 | 250 | 60 | 17.5 | 1.02 |
| CE 10 | 100 | 0 | 60 | - | - |
| CE 11 | 100 | 0 | 65 | 4.9 | 1.08 |
| CE 12 | 100 | 0 | 70 | 9.8 | 1.04 |
| CE 13 | 100 | 0 | 75 | 14.2 | 1.00 |
| CE 14 | 100 | 0 | 80 | 19.8 | 0.96 |
| Note: Ex and CE mean Example and Comparative Example, respectively. | | | | | |

Table 4 lists the extents of improvement in slurry fluidity in the case of addition of various types of gypsum dihydrates. Shown here are the fluidities of plaster slurries obtained by adding a gypsum dihydrate in a selected amount to 100 parts by weight of a gypdum semihydrate, and the specific gravities of plasterboards provided from use of such plaster slurries. The gypsums dihydrates used are desulfurnized gypdum A in Examples Example 15 - Example 19 and desulfurnized gypdum B in Example 20 - Example 24.

Heretofore, the fluidity of a plaster slurry has been adjusted by adjustment of the ratio of water as seen in Comparative Examples 10 - 14. It has been found that in the practice of the invention, fluidity can be attained as desired by properly adjusting the amount of a gypsum dihydrate to be added even in the case of one and the same amount of water added. In Comparative Example 10, a plaster slurry was intended to be formed in the same water ratio of 60% as in the example, but the slurry was fully free of fluidity so that no flow rate nor specific gravity of the resulting plasterboard was determinable.

In Comparative Examples 11 - 14, fluidity was improved with increased water ratio, and a plasterboard was produced from the resultant plaster slurry. Though the specific gravity in fact revealed a tendency to drop in Comparative Examplees 11 - 14, the plasterboard of the invention can be protected against reduced specific gravity to the smallest possible degree. Thus, the amount of water to be added can be decreased substantially to such an extent as to match that exerted by improved fluidity due to the addition of a gypsum dihydrate. This is economically favorable.

### Examples 25 - 31 and Comparative Examiner 15

A plasterboard was produced in accordance with the mixing ratios of Table 5. The slurry fluidity was measured with the results tabulated also in Table 5.

In Table 5, examination was made of the extents of improvement in slurry fluidity by use of various typical gypsum dihydrates shown in Table 2. A case where no gypsum dihydrate was added to a gypsum semihydrate is shown as Comparative Example 15.

**Table 5**

| | gypsum semihydrate parts by weight | gypsum dihydrate parts by weight | name of gypsum dihydrate | flow value (cm) |
|---|---|---|---|---|
| Ex 25 | 100 | 67 | desulfurnized gypsum A | 14.3 |
| Ex 26 | 100 | 67 | desulfurnized gypsum B | 13.8 |
| Ex 27 | 100 | 67 | desulfurnized gypsum C | 14.8 |
| Ex 28 | 100 | 67 | desulfurnized gypsum D | 14.1 |
| Ex 29 | 100 | 67 | phosphoric gypsum A | 10.0 |
| Ex 30 | 100 | 67 | phosphoric gypsum B | 8.7 |
| Ex 31 | 100 | 67 | natural gypsum A | 14.2 |
| CE 15 | 100 | 0 | not added | 6.6 |
| Note: Ex and CE mean Example and Comparative Example, respectively. | | | | |

From Table 5, the extents of improvement in slurry fluidity are confirmed which result from incorporation of various gypsum dihydrates. Such extents have proved to vary depending upon the grades of gypsum dihydrates.

A mixture of a particulate material and water is variable in fluidity with the particle size of the particulate material. In this respect, it is important also in the practice of the present invention that the amount of a gypsum dihydrate to be added be appropriately chosen to meet with the fluidity of a plaster slurry to be desired. However, when incorporated in a certain amount, the gypsum dihydrate can in truth improve the fluidity of the plaster slurry with ultimate reduction of the amount of water to be added. Thus, a plasterboard is obtainable with higher specific gravity and greater strength characteristics.

### Examples 32 - 33

Table 6 shows the results arising from use of a paper chip in combination with a gypsum dihydrate.

In Example 32, the same continuous cast molding process as in Example 1 was carried out in accordance with the mixing ratios of starting materials and the dimension of a paper chip as shown in Table 6, whereby there was produced a composite plasterboard according to the present invention. As a plaster stock, however, a gypsum previously prepared by mixing 57 parts by weight of a dry gypsum and 43 parts by weight of a gypsum dihydrate (produced at a thermal power plant in Ibaragi Prefecture, desulfurnized gypsum A shown in Table 2) was used in place of 100 parts by weight of a dry gypsum. Various characteristics of the resultant composite plasterboard are tabulated in Table 6.

Meanwhile, in Example 33, the same continuous cast molding process as in Example 1 was conducted in accordance with the mixing ratios of starting materials and the dimension of a paper chip as shown in Table 6, whereby a composite plasterboard according to the present invention was produced. As a plaster stock, however, a gypsum previously prepared by mixing 65 parts by weight of a dry gypsum and 35 parts by weight of a gypsum dihydrate (produced at a thermal power plant in Ibaragi Prefecture, desulfurnized gypsum B of Table 2) was used in place of 100 parts by weight of a dry gypsum. Various characteristics of the resultant composite okasterboard are tabulated in Table 6.

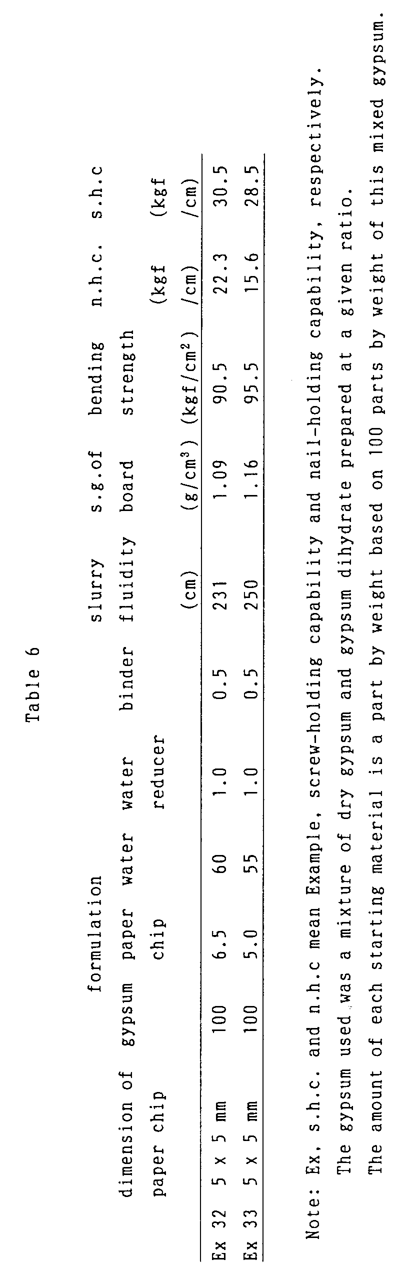

In Example 32 and Example 33, a composite plasterboard was produced by incorporating a gypsum dihydrate in a paper chip-containing basic formulation. From comparison of the examples to the comparative examples in Table 1, it has been confirmed that addition of the gypsum dihydrate contributes relatively to improved fluidity. Namely, despite a paper chip incorporated in an amount similar to that of Example 2 in Table 1, the water ratio can be decreased to a great extent (75 → 60, 50%), and the fluidity drop at that time is slight and acceptable for practical application. It has also been found that the board shows a rise in specific gravity, producing remarkable enhancements in bending strength and screw- and nail-holding capabilities.

As Examples 34 - 36, further cases are illustrated in which a chip body is substituted for the paper chip.

### Example 34

A coupling agent was prepared by mixing and dispersing 10 g of vinyl trimethoxysilane in 100 g of methanol of an industrial grade. This coupling agent was sprayed in an amount of 10 g on to 100 g of a chip (4 mm × 4 mm) body made of shreds of a waste cassette tape to thereby render the chip body compatible. Immediately after the spraying, the chip body was treated with stirring for 3 hours in a stream of hot air of 80 °C, whereby there was obtained a chip body coated on its surface with the coupling agent. Subsequently, 75 g of the chip body thus treated was put into 1000 g of a dry gypsum (standard mixed water 70%), followed by dry mixing of the whole. In the resulting mixture were placed 500 g of a commercially available adhesive of a 10% PVA type (tradename Denka Poval) and 400 g of water. Stirring by a hand mixer gave a slurry. This slurry was interposed between two base papers for plasterboard use and caused to spread and orient while being pressed from above with a board until the former had a thickness of 1.2 cm. Thus, a composite plasterboard of the invention was provided. Tabulated in Table 7 are various characteristics of the resultant composite plasterboard.

### Comparative Example 16

The procedure of Example 34 was repeated except that the aqueous adhesive was omitted. Tabulated in Table 1 are various characteristics of the resultant composite plasterboard.

### Comparative Example 17

The procedure of Example 34 was repeated except that the coupling agent was omitted. Tabulated in Table 1 are various characteristics of the resultant composite plasterboard.

### Example 35

An alumina sol and an acidic silica sol were mixed with each other in their respective amounts of 100 g, and the resulting mixture was incorporated with 30 g of methylmethoxysilane so that a desired coupling agent was prepared. In this coupling agent was immersed 100 g of a crushed material (12 mm x 12 mm) of a polyvinyl chloride sheet for agricultural purposes. After being separated from the liquid phase, the resultant chip body was treated with stirring for 30 minutes in a stream of hot air of 80°C, whereby there was formed a chip body coated on its surface with the coupling agent.

Next, with use of 500 g of an aqueous solution of 10% as regards a commercially available adhesive of an vinyl acetate type as an aqueous adhesive, a composite plasterboard of the invention was provided in the same manner as in Example 34. Tabulated in Table 7 are various characteristics of the resultant composite plasterboard.

### Comparative Example 18

The procedure of Example 35 was repeated except that the aqueous adhesive was omitted. Tabulated in Table 7 are various characteristics of the resultant composite plasterboard.

### Comparative Example 19

The procedure of Example 35 was repeated except that the coupling agent was omitted. Tabulated in Table 7 are various characteristics of the resultant composite plasterboard.

### Example 36

Methacryloxypropyltrimethoxysilane was dissolved in an amount of 12 g in 87 g of methyl methacrylate, and to the resulting solution were added 0.15 g of azoisobutylonitrile and 800 ml of diglym. The resulting solution was reacted at 70°C for 6 hours to thereby obtain a coupling agent. This coupling agent was sprayed in an amount of 30 g on to 100 g of shreds (15 mm x 15 mm) of spent tickets. Immediately after the spraying, the shreds was treated with stirring in a stream of hot air of 100 °C, and there was obtained a chip body coated on its surface with the coupling agent. Next, with use of 500 g of an aqueous solution of 10% as regards a commercially available adhesive of an acryl emulsion type (tradename Sony Bond SC) as an aqueous adhesive, a composite plasterboard of the invention was provided in the same manner as in Example 34. Tabulated in Table 1 are various characteristics of the resultant composite plasterboard.

### Comparative Example 20

The procedure of Example 36 was repeated except that the aqueous adhesive was omitted. Tabulated in Table 7 are various characteristics of the resultant composite plasterboard.

### Comparative Example 21

The procedure of Example 36 was repeated except that the coupling agent was omitted. Tabulated in Table 7 are various characteristics of the resultant composite plasterboard.

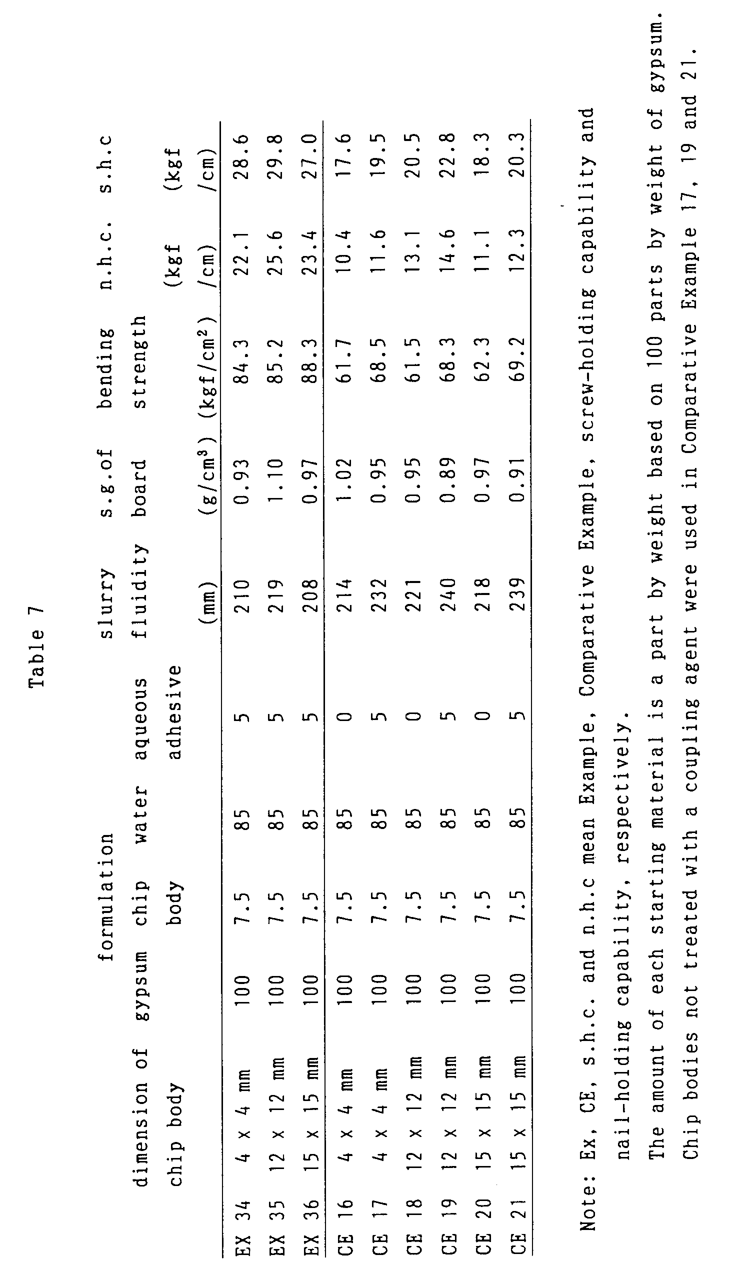

As is clear from Table 7, it has been found that according to the present invention, slurry fluidity is satisfactory for practical purposes, and the finished composite plasterboard is excellent in respect of bending strength and screw- and nail-holding capabilities. In Examples 34 and 36, a magnetic chip absorptive to an electromagnetic wave is used and oriented to lie substantially in parallel with a plane perpendicular to the thickness direction of the composite plasterboard with the result that electromagnetic wave-absorbing performance can be expected with high efficiency. Accordingly, the composite plasterboard of the invention is thought to open up a new market for various applications.

### Industrial Applicability

In accordance with the present invention, a paper chip and/or a chip body is incorporated as fillers in a plaster stock and oriented in a specified direction so that the resultant composite plasterboard shows marked enhancements in regard to bending strength and screw- and nail-holding capabilities. Additionally, incorporation of the paper chip and/or the chip body and addition of a gypsum dihydrate permit a sharp reduction in the amount of mixing water at the time of miving of starting matrials, and moreover lead to improved dewatering with the consequence that the composite plasterboard can be prevented against undesirable weight saving and also against adverse strength decline tending to occur from the latter. Further, least water remaining in the composite plasterboard brings about saved energy in a subsequent drying step and hence increased economy. In view of the reuse of those waste materials having today invited public attention, the invention is greatly significant.

## Claims

1. A composite plasterboard comprising a plaster stock and a filler incorporated therein, characterized in that the filler comprises as essential components a paper chip and/or a chip body, and the filler is oriented to lie substantially in parallel with a plane perpendicular to the thickness direction of the composite plasterboard.

2. A composite plasterboard according to claim 1, characterized in that the plaster stock comprises 100 parts by weight of a gypsum semihydrate and 10 - 250 parts by weight of a gypsum dihydrate.

3. A composite plasterboard according to claim 1, characterized in that the chip body is coated with a coupling agent, and a matrix of the plaster stock comprises an aqueous adhesive.

4. A composite plasterboard according to claim 3, characterized in that the chip body is based on a magnetic material or a plastic material.

5. A composite plasterboard according to claim 3 or 4, characterized in that the coupling agent is added in an amount of 0.01 - 3% by weight based on the weight of the plaster stock.

6. A composite plasterboard according to claim 3 or 4, characterized in that the aqueous adhesive is added in an amount of 3 - 20% by weight based on the weight of the plaster stock.

7. A composite plasterboard according to any one of claims 1 to 3, characterized in that the paper chip and/or the chip body is added in an amount of 0.2 - 25% by weight based on the weight of the plaster stock.

8. A composite plasterboard according to any one of claims 1 to 3, characterized in that the paper chip and/or the chip body has a planar portion dimensioned to be 1 mm x 1 mm - 50 mm x 50 mm.

9. A composite plasterboard according to any one of claims 1 to 3, characterized in that the paper chip and/or the chip body has a long side/short side ratio of 1 - 10.

10. A process for producing a composite plasterboard, characterized in that the process comprises mixing a plaster stock, a paper chip and/or a chip body, water and, where desired, another filler, supplying the resultant plaster slurry on to a movable conveyor, causing the conveyor to move, and orienting the paper chip and/or the chip body, by means of orienting means, to lie substantially in parallel with a plane perpendicular to the thickness direction of a composite plasterboard to be formed.

11. A process for producing a composite plasterboard, characterized in that the process comprises mixing a plaster stock, a paper chip and/or a chip body, water and, where desired, another filler, charging the resultant plaster slurry in a tank having a mesh drum mounted thereon, sucking an air contained in the mesh drum to thereby deposit the plaster slurry on the mesh drum, and orienting the paper chip and/or the chip body to lie substantially in parallel with a plane perpendicular to the thickness direction of a composite plasterboard to be formed.

12. A composition for plasterboard use which comprises a plaster stock, water and, where desired, another filler, characterized in that the plaster stock comprises 100 parts by weight of a gypsum semihydrate and 10 - 250 parts by weight of a gypsum dihydrate.

13. A process for producing a composite plasterboard which comprises covering a core material on both of its two sides with two base papers for plasterboard use, characterized in that the process further includes casting a plaster slurry in between the base papers, the plaster slurry being composed of 10 - 250 parts by weight of a gypsum dihydrate based on 100 parts by weight of a gypsum semihydrate.
